# EUROPÄISCHE PATENTANMELDUNG

(11) **EP 1 098 418 A2**
(43) Veröffentlichungstag der Anmeldung: **09.05.2001**
(21) Anmeldenummer: 00810978.7
(22) Anmeldetag: 23.10.2000
(51) Int. Cl.: H02H 9/04, H01H 37/76

(54) **Ueberspannungsableiter für ein Niederspannungsnetz**

(30) Priorität: 03.11.1999 DE 19952888
(71) Anmelder: ABB CMC Carl Maier AG, 8200 Schaffhausen (CH)
(72) Erfinder: Mühle, Peter, 8200 Schaffhausen (CH); Mayer, Siegfried, 78244 Gottmadingen (DE); Busenhart, Thomas, 8207 Schaffhausen (CH)
(74) Vertreter: ABB Patent Attorneys

(57) **Zusammenfassung**

Der Überspannungsableiter enthält eine in Serie zu einem Schutzelement (1) des Überspannungsableiters geschaltete, thermisch auslösbare Schaltstelle (4). Diese Schaltstelle (4) begrenzt die Energieaufnahme des Überspannungsableiters und weist zwei relativ zueinander bewegliche Schaltstücke (6, 7) auf. Die beiden Schaltstücke sind unterhalb eines Grenzwertes einer durch einen Stossstrom hervorgerufenen thermischen Überlast über eine Schmelzverbindung (5) elektrisch leitend und mechanisch fest miteinander verbunden. Auf ein bewegliches (7) der beiden Schaltstücke wirkt eine vorgespannte Biegefeder (8). Ein Ende (9) der Biegefeder (8) ist auf einem als Ableiterstromanschluss verwendeten Leiter (L₁) eines Niederspannungsnetzes schmelzverbindungsfrei abgestützt. Das andere Ende der Biegefeder (8) ist unter Bildung der Vorspannung von der Schmelzverbindung (5) oder dem beweglichen (7) der beiden Schaltstücke (6, 7) gehalten. Bei thermischer Überlast kann so der Überspannungsableiter sehr schnell und unter Bildung eines grossen Luftspalts aus dem Netz genommen werden.

## Beschreibung

### TECHNISCHES GEBIET

Bei der Erfindung wird ausgegangen von einem Überspannungsableiter für ein Niederspannungsnetz nach dem Oberbegriff von Patentanspruch 1. Ein solcher Überspannungsableiter enthält eine in Serie zu einem Schutzelement des Überspannungsableiters geschaltete, thermisch auslösbare Schaltstelle, die die Energieaufnahme des Überspannungsableiters begrenzt. Diese Schaltstelle ist zwischen einen Phasen- oder Neutralleiter des Niederspannungsnetzes und einen netzseitigen Stromanschluss des vorgenannten Schutzelementes geschaltet.

In Niederspannungsnetzen dient der Überspannungsableiter dem Schutz des als Anlage oder Gerät ausgebildeten Verbrauchers vor Überspannungen wie sie typischerweise durch Blitzeinschläge in der Ferne oder Schalthandlungen hervorgerufen werden. Typischer Einsatzort ist die Niederspannungs-Haupt- oder Niederspannungs-Unterverteilung. Der mit der thermisch auslösbaren Schaltstelle versehene Überspannungsableiter kann dann vorzugsweise durch Aufschnappen direkt an ein Sammelschienen-System der Verteilung angeschlossen werden. Durch eine in den Überspannungsableiter eingebaute vorzugsweise optische Betriebsanzeige kann leicht festgestellt werden, ob das durch die Schaltstelle vor thermischer Überlast geschützte Schutzelement des Überspannungsableiters noch aktiv ist oder ob es nach Ansprechen des Schutzes infolge einer thermischer Überlast durch Öffnen der Schaltstelle vom Netz abgetrennt und daher inaktiv ist. Über gegebenenfalls vorgesehene Fernmeldekontakte und eine Fernmeldeleitung kann der Betriebszustand des Überspannungsableiters auch in einer entfernten Warte erkannt werden. Es kann so äusserst schnell der durch unzulässig hohe thermische Belastungen vom Netz getrennte Überspannungsableiter ersetzt und der Verbraucher wieder wirksam geschützt werden.

### STAND DER TECHNIK

Ein Überspannungsableiter der vorgenannten Art enthält eine in Serie zu einem Schutzelement des Überspannungsableiters geschaltete, thermisch auslösbare Schaltstelle. Die Schaltstelle begrenzt die Energieaufnahme des Überspannungsableiters und weist hierzu zwei relativ zueinander bewegliche Schaltstücke auf. Diese Schaltstücke sind üblicherweise über eine als Lötverbindung ausgeführte Schmelzverbindung elektrisch leitend und mechanisch fest miteinander verbunden. Oberhalb eines Grenzwertes einer durch einen Stossstrom hervorgerufenen thermischen Überlast wird die Lötverbindung aufgeschmolzen. Die unter der Wirkung eines vorgespannten Federelementes stehenden Schaltstücke werden auseinandergeführt und so das Schutzelement des Überspannungsableiters vom Netz getrennt.

Thermisch auslösbare Schaltstellen mit federbelasteten Schaltstücken oder mit einem federnd ausgebildeten Schaltstück sind beschrieben in US 3,046,374 A und US 5,770,993 A. Bei diesen Schaltstellen werden bewegliche stromleitende Teile, wie federbelastete Schaltstücke oder elektrisch leitend ausgebildete Blattfedern, jeweils an ihren beiden Enden unter Aufbau von Vorspannung mittels eines Schmelzlotes in elektrisch leitender Weise fixiert. Beim Auftreten von Überstrom schmilzt das Schmelzlot und werden die Schaltstellen durch Entspannen der vorgespannten Federn geöffnet. Solche Schaltstellen sind jedoch verhältnismässig aufwendig, da die Schaltstücke bzw. die Blattfedern jeweils mit Hilfe von zwei Schmelzverbindungen fixiert sind.

### KURZE DARSTELLUNG DER ERFINDUNG

Der Erfindung, wie sie in den Patentansprüchen angegeben ist, liegt die Aufgabe zugrunde, einen Überspannungsableiter der eingangs genannten Art zu schaffen, welcher einfach ausgebildet ist, und bei dem das Schutzelement dennoch vor unzulässig hoher Überlast geschützt ist.

Beim Überspannungsableiter nach der Erfindung weist die thermisch auslösbare Schaltstelle ein als Biegefeder ausgeführtes Federelement mit zwei Enden auf, von denen ein erstes auf einem als Ableiterstromzuführung verwendeten Leiter des Niederspannungsnetzes schmelzverbindungsfrei abgestützt ist und ein zweites unter Bildung von Vorspannung von einer Schmelzverbindung oder einem ersten der beiden Schaltstücke gehalten ist. Da das erste Ende der Biegefeder direkt, d. h. ohne zusätzliche Verbindungsmittel, auf einem sowieso vorhandenen und als Stromanschluss verwendeten Leiter des Niederspannungsnetzes abgestützt ist, kann der Überspannungsableiter besonders einfach und kostengünstig gefertigt werden. Da das zweite Ende der Biegefeder ein bewegliches der beiden Schaltstücke bildet oder zumindest diesem Schaltstück zugeordnet ist, da beim Entspannen der Biegefeder dieses Ende in kurzer Zeit einen grossen Weg zurücklegt, und da die hierbei bewegten Teile eine relativ geringe Masse aufweisen, öffnet sich die Schaltstelle äusserst schnell und schützt dadurch das nachgeschaltete Schutzelement des Überspannungsableiters sicher vor thermischer Überlast. Durch die Verwendung der Biegefeder kann die Anzahl der die Schaltstelle bildenden Einzelteile reduziert werden. Zugleich können hierdurch auch die Abmessungen der Schaltstelle gering gehalten werden und kann die Schaltstelle platzsparend in einem vergleichsweise kleinen Überspannungsableitergehäuse untergebracht werden.

Ist die Biegefeder elektrisch leitend ausgebildet und weist sie ein als bewegliches Schaltstück ausgeführtes zweites Ende auf, so werden für die erfindungsgemässe Schaltstelle als zusätzliche Einzelteile lediglich die Biegefeder und die Schmelzverbindung benötigt, da weitere Einzelteile der Schaltstelle entfallen. Eines dieser Einzelteile, nämlich ein feststehendes Schaltstück, wird dann durch einen Stromanschluss des Schutzelementes des Überspannungsableiters gebildet und ist daher automatisch vorhanden, während ein weiteres Einzelteil, nämlich ein Führungselement für das bewegliche Schaltstück, bereits durch die Biegefeder bzw. durch deren Lagerung auf einem sowieso vorhandenen Phasen- oder Neutralleiter vorgegeben ist.

Besonders hohe Stossströme können von der Schaltstelle dann geführt werden, wenn die Biegefeder ein hakenförmig gekrümmtes zweites Ende aufweist, welches auf einem als bewegliches Schaltstück ausgeführten Ende eines überwiegend flexibel ausgeführten Stromleiters aufliegt. Da der die thermische Überlast hervorrufende Strom nun durch einen von der Biegefeder unabhängigen Stromleiter geführt werden kann, ist es nun möglich, die Biegefeder auch aus einem Strom nur mässig oder auch garnicht leitenden Federmaterial zu fertigen.

Mit Vorteil ist die Biegefeder als Schraubenfeder ausgeführt, da dann das bewegliche Schaltstück beim Öffnen der Schaltstelle infolge Zurückbiegens der Feder rasch einen grossen Weg zurücklegt. Hierdurch wird eine dielektrisch besonders wirksame Trennstrecke erreicht.

Es empfiehlt sich, die Schraubenfeder aus Runddraht zu wickeln, da sie dann in besonders vorteilhafter Weise gefertigt werden kann.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig.1: ein stark vereinfachtes Schaltbild einer Niederspannungsverteilung mit einem am Eingang eines Verbrauchers angebrachten und zwischen Phasen- oder Neutralleiter und einer Potentialschiene geschalteten Überspannungsableiter nach der Erfindung,
- Fig.2: eine perspektivische Ansicht einer ersten Ausführungsform des Überspannungsableiters gemäss Fig.1 mit einem Schutzelement des Überspannungableiters und mit einer diesem Schutzelement vorgeschalteten, thermisch auslösbare Schaltstelle vor deren Auslösung,
- Fig.3: die Anordnung gemäss Fig. 2 nach dem Auslösen der Schaltstelle,
- Fig.4: eine perspektivische Ansicht einer zweiten Ausführungsform des Überspannungsableiters gemäss Fig.1 mit einem Schutzelement des Überspannungableiters und mit einer diesem Schutzelement vorgeschalteten, thermisch auslösbare Schaltstelle vor deren Auslösung, und
- Fig.5: die Anordnung gemäss Fig. 4 nach dem Auslösen der Schaltstelle.

### WEGE ZUR AUSFÜHRUNG DER ERFINDUNG

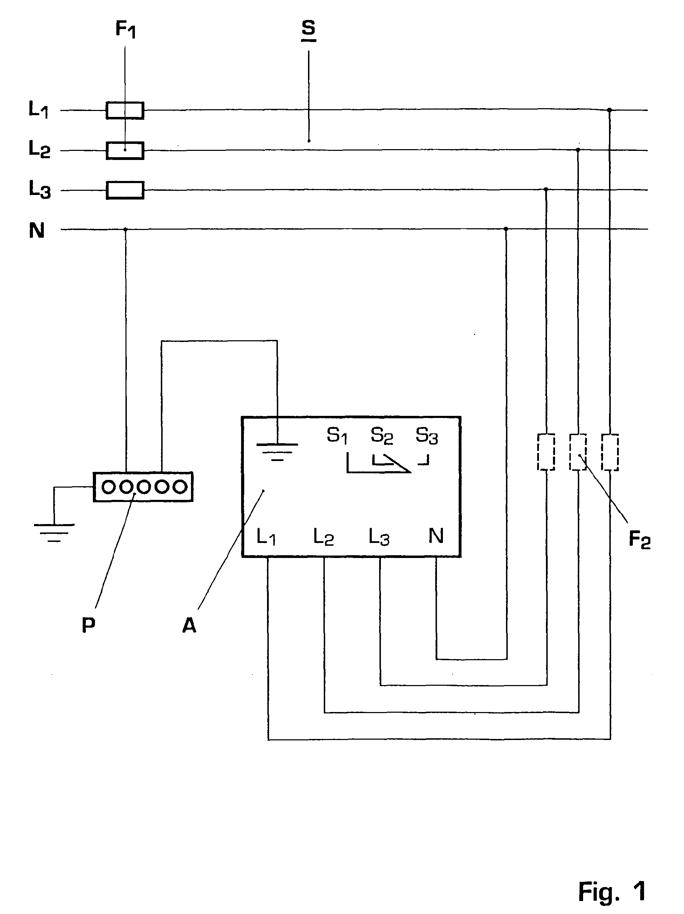

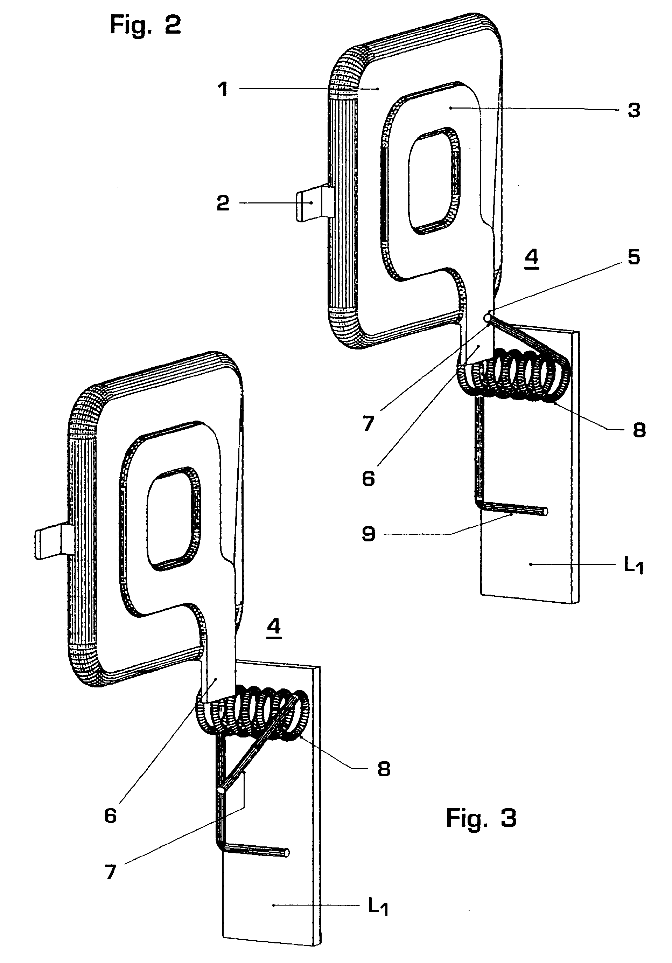

In allen Figuren bezeichnen gleiche Bezugszeichen auch gleichwirkende Teile. Eine in Fig. 1 dargestellte und als Schienensystem S ausgeführte Niederspannungsverteilung enthält drei Phasenleitern L₁, L₂, und L₃ und einen Neutralleiter N. Die Höhe des in das Schienensystem eingespeisten Stroms wird durch einen auf das Schienensystem aufgeschnappten Strombegrenzer F₁ unterhalb von einem ersten Grenzwert gehalten. Am Eingang des Verteilers hinter dem Strombegrenzer F₁ und in der Nähe eines vor Überspannungen zu schützenden Verbrauchers ist ein ebenfalls auf das Schienensystem aufgeschnappter Überspannungsableiter A vorgesehen. Dieser Überspannungsableiter weist mit den Phasenleitern L₁, L₂, und L₃ und dem Neutralleiter N verbundene Eingänge sowie einen an eine geerdete Potentialausgleichsschiene P geführten Abgang auf. Der Ableiter enthält aus den Figuren 2 bis 5 ersichtliche Schutzelemente und den Schutzelementen vorgeschaltete thermisch auslösbare Schaltstellen. Falls erforderlich kann dem Überspannungsableiter A ein ( in Fig.1 gestrichelt dargestellter) Strombegrenzer F₂ vorgeschaltet werden, welcher den gegebenenfalls vom Überspannungsableiter geführten Strom unterhalb eines zweiten Grenzwerts hält, welcher kleiner als der erste Grenzwert ist.

Der Überspannungsableiter A hat die Aufgabe, transiente Überspannungen, so wie typischerweise durch Blitzschläge oder Schaltvorgänge hervorgerufen werden, vom Eingang des vorgenannten Verbrauchers, beispielsweise eine Verbraucheranlage oder ein einzelner Verbraucher, fernzuhalten und so die Anlage oder den einzelnen Verbraucher vor Überspannungen zu schützen. Beim Begrenzen einer transienten Überspannung führen die Schutzelemente des Überspannungsableiters Ableitstossströme. Diese Ströme können gegebenenfalls das Energieaufnahmevermögen der Schutzelemente übersteigen. Zum Schutz des Überspannungsableiters vor zu grosser Energieaufnahme sind daher den Schutzelementen die thermisch auslösbaren Schaltstellen vorgeschaltet.

Lösen diese Schaltstellen aus und trennen so den Überspannungsableiter aus dem Netz, so wird dies in der Nähe durch Änderung eines Lichtsignals optisch angezeigt und einer entfernten Warte über Fernmeldekontakte S₁, S₂, und S₃ gemeldet. Der Überspannungsableiter kann nun revidiert und wieder betriebsbereit gemacht werden.

In den Figuren 2 bis 5 sind zwei Ausführungsbeispiele der thermisch auslösbaren Schaltstellen dargestellt. In diesen Figuren bezeichnet das Bezugszeichen 1 ein als Varistor auf der Basis von Metalloxid ausgeführtes, scheibenförmiges Schutzelement des Überspannungsableiters A. Mit den Bezugszeichen 2 bzw. 3 sind zwei auf entgegengesetzt angeordnete Stirnflächen des Varistors 1 geführte Stromanschlüsse bezeichnet, von denen der Stromanschluss 2 mit der Potentialausgleichsschiene P und der Stromanschluss 3 über eine thermisch auslösbare Schaltstelle 4 mit dem Phasenleiter L₁ des Schienensystems S in elektrisch leitender Verbindung steht.

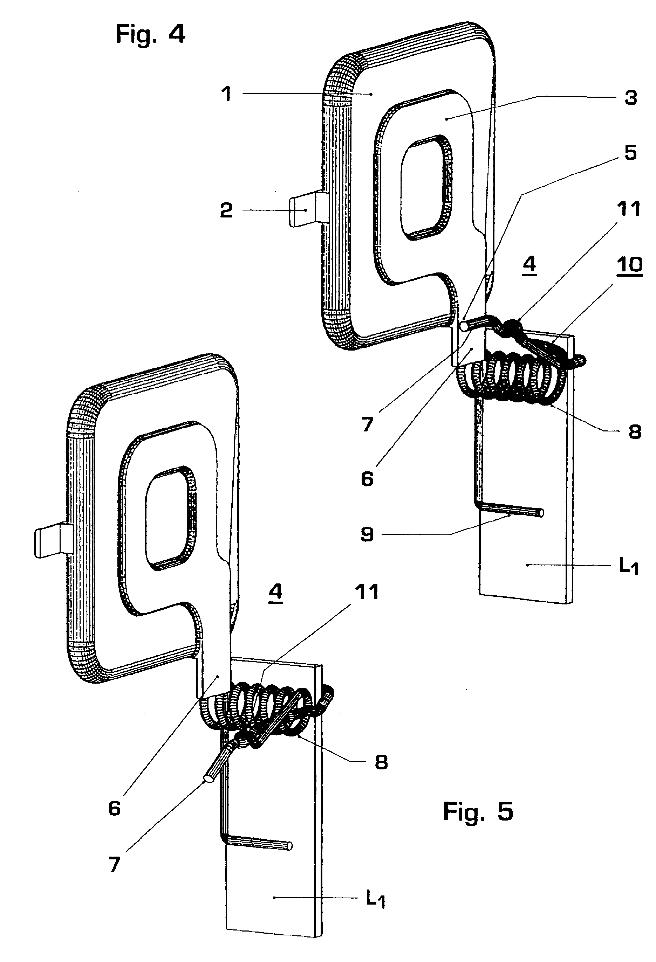

Die Schaltstelle 4 ist gebildet von einer vorzugsweise als Lötstelle ausgeführten Schmelzverbindung 5 und zwei relativ zueinander beweglichen Schaltstücken 6 und 7. Das Schaltstück 6 ist feststehend angeordnet und wird von einem über den Varistor überstehenden Endabschnitt des Stromanschlusses 3 gebildet. Das Schaltstück 7 ist beweglich ausgeführt und wird bei der Ausführungsform nach den Figuren 2 und 3 von einem durch die Schmelzverbindung 5 auf dem Schaltstück 6 fixierten Ende einer vorgespannten Biegefeder 8 gebildet. Ein zweites Ende 9 der als Schraubenfeder ausgeführten Biegefeder ist direkt, d. h. ohne zusätzliche Verbindungsmittel, wie etwa eine Schmelzverbindung auf der Basis einer elektrisch leitenden Legierung, auf dem als Stromschiene ausgebildeten und als Ableiterstromanschluss dienenden Phasenleiter L₁ abgestützt. Bei der Ausführungsform nach den Figuren 4 und 5 wird das bewegliche Schaltstück 7 von einem festen Ende eines überwiegend flexibel ausgeführten Stromleiters 10, beispielsweise einer Litze, gebildet. Die Biegefeder 8 muss dann nicht mehr elektrisch leitfähig ausgebildet sein. Darüber hinaus ist dann das eine Ende der Biegefeder 8 nicht mehr als Schaltstück, sondern hakenförmig gekrümmt, ausgeführt. Der hierbei gebildete Haken 11 liegt dann mit Vorspannkraft auf dem als Schaltstück 7 ausgebildeten Ende des Stromleiters 10 auf.

Die Schaltstelle wirkt nun wie folgt: Wird eine transiente Überspannung in das Schienensystem eingespeist, so begrenzt das Schutzelement 1 die im Phasenleiter L₁ auftretende Überspannung. In entsprechender Weise begrenzen in den beiden anderen Phasenleiter und im Nulleiter andere Schutzelemente die dort auftretenden Überspannungen. Überschreitet ein beim Begrenzen kurzzeitig, d.h. während einiger Mikrosekunden, auftretenden Ableitstrom einen vorgegebenen Grenzwert, beispielsweise von 40 kA, hält der Ableitstrom zu lange an oder dauert die transiente Überspannung mehr als einige Mikrosekunden, so tritt eine Alterung oder ein Defekt am Schutzelement 1 auf. Dadurch nimmt der elektrische Widerstand des Schutzelementes ab und es wird ein grosser Leckstrom geführt, welcher die Schmelzverbindung 5 stark erweicht und das unter Vorspannung stehende Schaltstück 7 freisetzt. Durch Entspannen der Biegefeder 8 wird das Schaltstück 7 nach unten geführt, der Strom unterbrochen und eine aus den Figuren 3 und 5 ersichtliche Gastrennstrecke gebildet. Der freigeschaltete Überspannungsableiter A kann nun ausgebaut und durch einen anderen Ableiter ersetzt werden.

Durch Ausbildung der Biegefeder 8 als Schraubenfeder wird zum einen beim Vorspannen und Festsetzen der Biegefeder auf dem Schaltstück 6 mit Hilfe der Schmelzverbindung 5 relativ viel Energie auf kleinem Raum gespeichert, die dann später zum raschen Öffnen der Schaltstelle 4 eingesetzt werden kann. Zum anderen kann sich wegen des langen Federweges so auch ein breiter, dielektrisch besonders vorteilhafter Luftspalt zwischen den beiden Enden der Schaltstücke 6 und 7 bilden.

Aus fertigungstechnischen Gründen ist es vorteilhaft, die Schraubenfeder aus Runddraht zu wickeln.

### BEZUGSZEICHENLISTE

- 1: Schutzelement
- 2, 3: Stromanschlüsse
- 4: Schaltstelle
- 5: Schmelzverbindung
- 6,7: Schaltstücke
- 8: Biegefeder
- 9: Federende
- 10: flexibler Stromleiter
- 11: Haken
- A: Überspannungsableiter
- F₁, F₂: Strombegrenzer
- L₁, L₂, L₃: Phasenleiter
- N: Nulleiter
- P: Potentialausgleichsschiene
- s: Schienensystem
- S₁, S₂ S₃: Fernmeldekontakte

## Patentansprüche

1. Überspannungsableiter (A) für ein Niederspannungsnetz, enthaltend eine in Serie zu einem Schutzelement (1) des Überspannungsableiters geschaltete, thermisch auslösbare Schaltstelle (4) mit zwei relativ zueinander beweglichen Schaltstücken (6, 7), welche unterhalb eines Grenzwertes einer durch einen Stossstrom hervorgerufenen thermischen Überlast über eine Schmelzverbindung (5) elektrisch leitend und mechanisch fest miteinander verbunden sind, und mit einem auf ein bewegliches (7) der beiden Schaltstücke wirkenden vorgespannten Federelement, welches beim Aufschmelzen der Schmelzverbindung (5) die beiden Schaltstücke (6, 7) auseinanderführt, dadurch gekennzeichnet, dass das Federelement als Biegefeder (8) ausgeführt ist und zwei Enden aufweist, von denen ein erstes (9) auf einem als Ableiterstromzuführung verwendeten Leiter (L₁ ) des Niederspannungsnetzes schmelzverbindungsfrei abgestützt ist und ein zweites unter Bildung der Vorspannung von der Schmelzverbindung (5) oder dem beweglichen (7) der beiden Schaltstücke (6, 7) gehalten ist.

2. Überspannungsableiter nach Anspruch 1, dadurch gekennzeichnet, dass die Biegefeder (8) elektrisch leitend ausgebildet ist und mit ihrem zweiten Ende das bewegliche Schaltstück (7) bildet.

3. Überspannungsableiter nach Anspruch 1, dadurch gekennzeichnet, dass die Biegefeder (8) ein als Haken (11) gekrümmtes zweites Ende aufweist, welches auf einem als bewegliches Schaltstück (7) ausgeführten Ende eines überwiegend flexibel ausgeführten Stromleiters (10) aufliegt.

4. Überspannungsableiter nach einem der Ansprüche 1 bis 3, dadurch gekennzeichnet, dass die Biegefeder (8) als Schraubenfeder ausgeführt ist.

5. Überspannungsableiter nach einem der Ansprüche 1 bis 4, dadurch gekennzeichnet, dass die Schraubenfeder aus Runddraht gewickelt ist.
